# EUROPÄISCHE PATENTANMELDUNG

(11) **EP 2 487 070 A1**
(43) Veröffentlichungstag der Anmeldung: **15.08.2012**
(21) Anmeldenummer: 11154399.7
(22) Anmeldetag: 14.02.2011
(51) Int. Cl.: B60R 1/12

(54) **Innenrückblickspiegel einer Innenrückblickspiegelanordnung für Kraftfahrzeuge**

(71) Anmelder: SMR Patents S.à.r.l., 1653 Luxembourg (LU)
(72) Erfinder: Liesener, Alf, 73614, Schorndorf (DE)
(74) Vertreter: Weber-Bruls, Dorothée

(57) **Zusammenfassung**

Es wird ein Innenrückblickspiegel bzw. Spiegelkopf (03) einer Innenrückblickspiegelanordnung für Kraftfahrzeuge beschrieben, welcher mindestens einen in den Innenrückblickspiegel bzw. Spiegelkopf (03) integrierten berührungsempfindlichen Schalter (13, 18, 19, 20, 26, 27) zur Betätigung wenigstens einer elektrischen Komponente (11, 06) und/oder eines elektrischen Verbrauchers (12, 22, 23, 24, 25) umfasst.

## Beschreibung

Die Erfindung betrifft einen Innenrückblickspiegel bzw. Spiegelkopf einer Innenrückblickspiegelanordnung für Kraftfahrzeuge gemäß dem Oberbegriff des Anspruchs 1.

Eine Innenrückblickspiegelanordnung für ein Kraftfahrzeug besteht beispielsweise aus einem an einer Konsole am Dachhimmel im Kraftfahrzeuginnenraum oder an der Innenseite der Windschutzscheibe z.B. an deren oberem Rand angeordneten Spiegelfuß, welcher mittels einer ein- oder mehrteiligen Spiegelfußabdeckung verkleidet sein kann, und einem an dem Spiegelfuß angeordneten, auch als Spiegelkopf bezeichneten Innenrückblickspiegel mit einem Spiegelglas. Der Spiegelkopf kann ein ein- oder mehrteiliges Innenrückblickspiegelgehäuse umfassen, welches unter anderem einen dem Spiegelfuß zugeordneten Grundträger beherbergen, einen solchen umfassen, oder von einem solchen umfasst werden kann.

Das Innenrückblickspiegelgehäuse weist auf seiner der Fahrtrichtung des Kraftfahrzeugs ab- und dem Fahrer des Kraftfahrzeugs zugewandten Vorderseite eine Öffnung auf, durch welche hindurch das Spiegelglas sichtbar ist bzw. in welcher das Spiegelglas angeordnet ist. Das Innenrückblickspiegelgehäuse umgreift hierbei das Spiegelglas an dessen Rändern zumindest zum Teil derart, dass z.B. die Einhaltung gesetzlicher Vorgaben bezüglich vorgeschriebener Mindestradien an exponierten, Personen im Kraftfahrzeuginnenraum zugänglichen Stellen sichergestellt ist.

Spiegelfuß und Spiegelkopf, beispielsweise Spiegelfuß und Grundträger eines Spiegelkopfs sind beispielsweise vermittels eines Kugelgelenks gelenkig miteinander verbunden, so dass der Spiegelkopf mit dem Spiegelglas in einer gewünschten, vom Fahrer des Kraftfahrzeugs individuell einstellbaren Verstelllage gegenüber dem Spiegelfuß einstellbar ist.

Die gelenkige Verbindung kann einen Abklappmechanismus umfassen, vermittels dem der Spiegelkopf bzw. der Innenrückblickspiegel durch Betätigung einer Bedieneinrichtung um einen definierten Schwenkwinkel aus einer Betriebsstellung um eine im Wesentlichen horizontale Achse in eine Abklappstellung und umgekehrt verschwenkt werden kann, um eine Blendung durch rückwärtige Lichtquellen in der Abklappstellung abzumindern. Eine Innenrückblickspiegelanordnung mit einem derartigen Abklappmechanismus ist beispielsweise durch DE 299 14 501 U1 bekannt.

Zur Vermeidung einer Blendung durch rückwärtige Lichtquellen ist sowohl alternativ als auch zusätzlich zu einem Abklappmechanismus bekannt, eine elektrochromatische Abblendung des Spiegelglases vorzusehen.

Ein hierfür erforderliches elektrochromatisch abblendbares Spiegelglas sowie eine für eine gegebenenfalls vorgesehene automatische Abblendung mit einem Helligkeitssensor zur Erfassung von rückwärtigen Lichtquellen verbundene Steuerschaltung für das elektrochromatisch abblendbare Spiegelglas stellen eine von vielen möglichen elektrischen Komponenten einer Innenrückblickspiegelanordnung dar, welche einzeln oder in Kombination mit anderen elektrischen Komponenten zumindest zum Teil im Innenrückblickspiegel bzw. Spiegelkopf untergebracht sein können.

Die zumindest teilweise Unterbringung einer oder mehrerer elektrischer Komponenten im Innenrückblickspiegel bzw. Spiegelkopf kann beispielsweise durch eine zumindest teilweise Beherbergung einer oder mehrerer elektrischer Komponenten durch ein Innenrückblickspiegelgehäuse vorgesehen sein. Beispiele für alternativ oder zusätzlich zu einem elektrochromatisch abblendbaren Spiegelglas zumindest zum Teil im Innenrückblickspiegel bzw. Spiegelkopf untergebrachte elektrische Komponenten sind:
- wenigstens ein Leuchtmittel einer ambienten, bei Dunkelheit während der Fahrt beispielsweise ständig eingeschalteten Innenraumbeleuchtung,
- wenigstens ein Leuchtmittel einer bei geöffneter Fahrzeugtür oder andersartig, z.B. gesondert eingeschalteten Innenraumbeleuchtung,
- wenigstens ein Leuchtmittel einer Lesebeleuchtung,
- zumindest ein Temperatur- und/oder Feuchtigkeitssensor zur Regelung der Klimatisierung der Kraftfahrzeuginnenraums, z.B. zur Regelung beispielsweise eines Abtauvorgangs der Windschutzscheibe,
- eine Mikrofonanordnung z.B. für eine Sprachsteuerung und/oder eines im Kraftfahrzeuginnenraum integrierten Telefonsystems und/oder z.B. für eine Raumkorrektur einer Kraftfahrzeuginnenraumbeschallung,
- eine Lautsprecheranordnung z.B. ebenfalls eines Telefonsystems und/oder einer Kraftfahrzeuginnenraumbeschallung,
- eine z.B. in das Spiegelglas integrierte Anzeigevorrichtung, wie etwa eine Kompassanzeige,
- ein Schalter oder Taster zur Betätigung zumindest einer der genannten elektrischen Komponenten, z.B. einer Ab- und Aufblendung des elektrochromatisch abblendbaren Spiegelglases, eines Ein- und Ausschaltens der Lesebeleuchtung, etc.

Dabei sind sowohl das Leuchtmittel der Innenraumbeleuchtung, als auch das der ambienten Innenraumbeleuchtung typischerweise insbesondere bei sehr flacher bzw. weit über den Fahrzeuginnenraum reichender Windschutzscheibe bzw. A-Säule im Spiegelkopf bzw. Innenrückblickspiegel integriert.

Ein wesentlicher Nachteil der bekannten Innenrückblickspiegelanordnungen ergibt sich durch eine für einen Fahrer oder Beifahrer eines Kraftfahrzeugs komplizierte bzw. nicht intuitive Bedienung einer oder mehrerer in dem Spiegelkopf bzw. Innenrückblickspiegel zumindest zum Teil untergebrachten elektrischen Komponenten, sei es durch Suchen und Betätigung eines außerhalb des Blickfelds liegenden Schalters oder Tasters am Armaturenbrett oder durch Suchen und Betätigung eines sich außerhalb des primären Sichtfeldes befindlichen Schalters oder Tasters beispielsweise am Innenrückblickspiegel bzw. Spiegelkopf oder an einer beispielsweise am Dachhimmel angeordneten Konsole. Dies kann bei der Bedienung zu einer Ablenkung und damit zu einer Herabsetzung der Verkehrssicherheit führen.

Durch US 7,677,774 B2 ist eine beispielsweise am Dachhimmel eines Kraftfahrzeugs anzuordnende Konsole mit einer Innenraumbeleuchtung bekannt. Um zumindest ein hinter einer Linse angeordnetes Leuchtmittel der Innenraumbeleuchtung ein- und auszuschalten und um zwischen einer bei wenigstens einer geöffneten Fahrzeugtür eingeschalteten Innenraumbeleuchtung und einer unabhängig vom Öffnen und Schließen einer Fahrzeugtür eingeschalteten Innenraumbeleuchtung umzuschalten, ist ein berührungsempfindlicher Schalter in die Konsole integriert. Der berührungsempfindliche Schalter umfasst eine berührungsempfindliche Oberfläche der Linse. Durch Antippen der berührungsempfindlichen Oberfläche wird das Leuchtmittel der Innenraumbeleuchtung ein- und durch nochmaliges Antippen wieder ausgeschaltet. Durch Entlangstreichen entlang der berührungsempfindlichen Oberfläche wird zwischen einer bei wenigstens einer geöffneten Fahrzeugtür eingeschalteten Innenraumbeleuchtung und einer unabhängig vom Öffnen und Schließen einer Fahrzeugtür eingeschalteten Innenraumbeleuchtung hin- und hergeschaltet.

Durch EP 1 133 405 A1 ist ein berührungsempfindlicher Schalter für Kraftfahrzeuganwendungen bekannt. Der Schalter umfasst eine länglich ausgedehnte Vertiefung in der Instrumententafel, die in Form einer im Wesentlichen geradlinigen, breiten Rille bzw. Nut, Auskehlung, Fuge, Hohlkehle ausgestaltet ist. Die Rille ist dabei so breit und tief, um darin mit einem Finger entlang zu streichen und um sie haptisch taktil und kinästhetisch eindeutig zu identifizieren.

Durch EP 2 230 130 A1 ist eine Innenraumbeleuchtung für Kraftfahrzeuge mit einem berührungsempfindlichen Schalter bekannt. Der berührungsempfindliche Schalter ist in den Aufbau der Innenraumbeleuchtung integriert. Der berührungsempfindliche Schalter umfasst wenigstens einen Teil einer transparenten Abdeckung, beispielsweise einer Linse, eines Leuchtmittels der Innenraumbeleuchtung. Für eine einwandfreie Bedienung bzw. Bedienbarkeit ist der den berührungsempfindlichen Schalter bildende Teil der transparenten Abdeckung zumindest bei Dunkelheit beleuchtet.

Eine Aufgabe der Erfindung ist die Entwicklung eines Innenrückblickspiegels bzw. Spiegelkopfs einer Innenrückblickspiegelanordnung für Kraftfahrzeuge, welcher einer Erhöhung der Verkehrssicherheit durch eine intuitive Bedienung bzw. Bedienbarkeit beiträgt.

Die Aufgabe wird gelöst mit den Merkmalen des unabhängigen Anspruchs.

Demnach ist ein Innenrückblickspiegel bzw. Spiegelkopf einer Innenrückblickspiegelanordnung für Kraftfahrzeuge mit einem Spiegelglas und mit mindestens einem in den Innenrückblickspiegel bzw. Spiegelkopf integrierten berührungsempfindlichen Schalter zur Betätigung beispielsweise durch Ein-und/oder Ausschalten und/oder Umschalten und/oder durch Regelung wenigstens einer elektrischen Komponente oder eines elektrischen Verbrauchers vorzugsweise aus der Gruppe:
- elektrochromatisch abblendbares Spiegelglas;
- Leuchtmittel einer ambienten Innenraumbeleuchtung;
- Leuchtmittel einer bei geöffneter Fahrzeugtür und/oder gesondert eingeschalteten Innenraumbeleuchtung;
- Leuchtmittel einer Lesebeleuchtung;
- z.B. in das Spiegelglas integrierte Anzeigevorrichtung, beispielsweise eine Kompassanzeige
vorgesehen.

Vorzugsweise ist wenigstens eine elektrische Komponente oder ein elektrischer Verbraucher aus der Gruppe:
- elektrochromatisch abblendbares Spiegelglas;
- Leuchtmittel einer ambienten Innenraumbeleuchtung;
- Leuchtmittel einer bei geöffneter Fahrzeugtür und/oder gesondert eingeschalteten Innenraumbeleuchtung;
- Leuchtmittel einer Lesebeleuchtung;
- z.B. in das Spiegelglas integrierte Anzeigevorrichtung, beispielsweise eine Kompassanzeige
zumindest zum Teil im Innenrückblickspiegel bzw. Spiegelkopf untergebracht oder zumindest zum Teil von einer einen vorzugsweise gelenkig mit dem Innenrückblickspiegel bzw. Spiegelkopf verbundenen Spiegelfuß der Innenrückblickspiegelanordnung verkleidenden Spiegelfußabdeckung beherbergt.

Bei der vermittels des berührungsempfindlichen Schalters gegebenenfalls betätigbaren Anzeigevorrichtung kann es sich alternativ oder zusätzlich auch um eine von Außen durch die Windschutzscheibe eines Kraftfahrzeugs hindurch sichtbare Anzeigevorrichtung einer elektronischen Parkscheibe und/oder eines Mautsystems handeln.

Besonders bevorzugt ist mindestens ein in den Spiegelkopf integrierter berührungsempfindlicher Schalter zur Betätigung beispielsweise durch Ein-und/oder Ausschalten und/oder Umschalten und/oder durch Regelung wenigstens einer zumindest zum Teil im Spiegelkopf untergebrachten elektrischen Komponente oder eines zumindest zum Teil im Spiegelkopf untergebrachten elektrischen Verbrauchers vorgesehen.

Alternativ oder zusätzlich kann mindestens ein in den Spiegelkopf integrierter berührungsempfindlicher Schalter zur Betätigung beispielsweise durch Ein-und/oder Ausschalten und/oder Umschalten und/oder durch Regelung wenigstens einer außerhalb des Spiegelkopfs im Kraftfahrzeug untergebrachten elektrischen Komponente oder zumindest eines außerhalb des Spiegelkopfs im Kraftfahrzeug untergebrachten elektrischen Verbrauchers vorgesehen sein.

Beispiele für vermittels eines oder mehrerer in den Spiegelkopf integrierter berührungsempfindlicher Schalter ein- und/oder ausschaltbarer und/oder umschaltbarer und/oder regelbarer, kurz betätigbarer, zumindest zum Teil im Spiegelkopf oder außerhalb des Spiegelkopfs untergebrachte elektrische Komponenten oder elektrische Verbraucher können sein:
- eine Sendeeinrichtung zur Fernsteuerung eines automatischen Torantriebs, beispielsweise eines Garagentoröffners,
- eine beispielsweise elektromotorische Kofferraumverriegelung und/oder ein elektromotorischer Antrieb zum Öffnen und/oder Schließen eines Kofferaumdeckels,
- eine Panik- bzw. Notver- und/oder Entriegelung der Fahrzeugtüren,
- ein Ein- und/oder Ausschalten der Warnblinklichtfunktion der Wiederholblinkleuchten des Kraftfahrzeugs,
- eine z.B. durch die Windschutzscheibe hindurch von außen sichtbare elektronische Parkscheibe,
- ein Telefonsystem,
- eine Kraftfahrzeugbeschallungseinrichtung.

Die elektromotorische Kofferraumverriegelung und/oder der elektromotorische Antrieb zum Öffnen und/oder Schließen des Kofferraumdeckels sind vorzugsweise nur bei stehendem, z.B. in Schaltstufe P oder N eines Automatikgetriebes abgestelltem Kraftfahrzeug über einen berührungsempfindlichen Schalter zu betätigen.

Beispielsweise eine Gesprächsannahme und/oder ―beendung eines Telefonsystems kann vermittels eines im Innenrückblickspiegel bzw. Spiegelkopf untergebrachten berührungsempfindlichen Schalters gesteuert werden.

Bei einer Kraftfahrzeugbeschallungseinrichtung können z.B. Lautstärkeregelung, Sendersuchlauf, Senderspeicherplatzwechsel, Titelsprung, Ein- Ausschalten vermittels wenigstens eines im Innenrückblickspiegel bzw. Spiegelkopf untergebrachten berührungsempfindlichen Schalters gesteuert werden.

Der mindestens eine berührungsempfindliche Schalter umfasst zumindest eine wenigstens von einem Fahrer und/oder Beifahrer des Kraftfahrzeugs aus frei zugängliche Oberflächenpartie des Innenrückblickspiegels bzw. Spiegelkopfs, welche als mindestens ein Tastfeld ausgebildet ist.

Das Tastfeld ist wenigstens in der Lage, mindestens eine beispielsweise druckfreie Berührung etwa vermittels eines oder mehrerer Finger zu erkennen und zumindest in ein erstes, zur Betätigung wenigstens einer elektrischen Komponente oder zumindest eines elektrischen Verbrauchers beispielsweise durch Ein- und/oder Ausschalten und/oder Umschalten und/oder durch Regelung vorgesehenes bzw. verwendbares Steuerungssignal des berührungsempfindlichen Schalters umzuwandeln. Beispiele von ersten Steuersignalen sind durch wiederholtes Antippen des Tastfelds erzeugte Ein- und Ausschaltsignale für eine oder mehrere elektrische Komponenten oder Verbraucher. Ist die Erkennung mehr als einer Berührung vorgesehen, so kann beispielsweise eine Berührung ein Einschaltsignal erzeugen, wohingegen zwei innerhalb einer vorgegebenen Zeitspanne zeitgleich erfolgende Berührungen ein Ausschaltsignal erzeugen können.

Vorzugsweise ist das mindestens eine Tastfeld alternativ oder zusätzlich in der Lage, mindestens ein beispielsweise druckfreies Entlangstreichen etwa vermittels eines oder mehrerer Finger zu erfassen bzw. erkennen und dies in mindestens ein zweites, zur Betätigung wenigstens einer elektrischen Komponente oder zumindest eines elektrischen Verbrauchers beispielsweise durch Ein- und/oder Ausschalten und/oder Umschalten und/oder durch Regelung vorgesehenes bzw. verwendbares Steuersignal des berührungsempfindlichen Schalters umzuwandeln. Das mindestens eine zweite Steuersignal kann hierbei beispielsweise linear proportional wenigstens desjenigen Teils einer Abmessung der das Tastfeld bildenden Oberflächenpartie sein, entlang welcher beispielsweise ein oder mehrere Finger entlangstreichen. Beispielsweise kann ein zweites Steuersignal, bei einem Entlangstreichen entlang einer vollständigen Abmessung der das Tastfeld bildenden Oberflächenpartie des Innenrückblickspiegels bzw. Spiegelkopfs um ein Maß größer sein, als ein zweites Steuersignal, bei dem nur ein Entlangstreichen entlang eines Teils einer vollständigen Abmessung der das Tastfeld bildenden Oberflächenpartie des Innenrückblickspiegels bzw. Spiegelkopfs erfolgt, welches Maß dem Verhältnis der vollständigen Abmessung zu dem Teil der Abmessung entspricht.

Das zweite Steuersignal kann in diskreten Stufenschritten angehoben und/oder abgesenkt werden, wobei zur Anhebung und/oder Absenkung um einen diskreten Stufenschritt das Tastfeld beispielsweise in diskrete Abschnitte unterteilt sein kann. Bei jedem Wechsel von einem diskreten Abschnitt zu einem anderen diskreten Abschnitt während des Entlangstreichens kann eine Anhebung und/oder Absenkung um einen diskreten Stufenschritt erfolgen.

Auch eine kontinuierliche Anhebung bzw. Absenkung des Steuersignals mit zunehmender Strecke, entlang der das Entlangstriechen erfolgt, ist denkbar.

Beispiele von zweiten Steuersignalen sind durch wiederholtes Entlangstreichen entlang der als Tastfeld ausgebildeten Oberflächenpartie des Innenrückblickspiegels bzw. Spiegelkopfs erzeugte Umschalt- und/oder Regelungssignale für eine oder mehrere elektrische Komponenten und/oder Verbraucher.

Einige wenige Beispiele einer Vielzahl denkbarer Umschaltsignale sind:
- die Eingangs erwähnte Umschaltung zwischen einer bei wenigstens einer geöffneten Fahrzeugtür eingeschalteten Innenraumbeleuchtung und einer unabhängig vom Öffnen und Schließen einer Fahrzeugtür eingeschalteten Innenraumbeleuchtung,
- das Umschalten einer Kraftfahrzeugbeschallungseinrichtung zwischen verschiedenen Musikquellen.

Regelungssignale können beispielsweise einer Dimmung der Leuchtstärke einer Innenraumbeleuchtung und/oder einer Lesebeleuchtung und/oder einer Anpassung der Lautstärke bzw. Lautstärkeregelung einer
Kraftfahrzeugbeschallungseinrichtung und/oder eines Telefonsystems dienen.

Dabei kann beispielsweise ein Umschalten zwischen mehreren Funktionen in der einen oder anderen Richtung und/oder eine Aufwärts- oder Abwärtsregelung und/oder ein Hin- und Herschalten durch Entlangstreichen entlang der als Tastfeld ausgebildeten Oberflächenpartie des Innenrückblickspiegels bzw. Spiegelkopfs in einer ersten Richtung und in einer zweiten, beispielsweise entgegen gesetzten Richtung erfolgen. Mit anderen Worten kann die Erzeugung eines oder verschiedener Ein- und/oder Ausschalt- und/oder Regelungs- und/oder Umschaltsignale abhängig von der Richtung des Entlangstreichens sein. Alternativ oder zusätzlich kann ein aufeinanderfolgendes Entlangstreichen in entgegengesetzten Richtungen entgegengesetzte bzw. einander aufhebende Regelungs- und/oder Umschaltsignale erzeugen.

Ebenfalls ist denkbar, dass die Ein- und/oder Ausschaltsignale und/oder Umschalt- und/oder Regelungssignale bildenden Steuersignale des berührungsempfindlichen Schalters abhängig von der Dauer der Berührung sind. Beispielweise kann ein kurzes Berühren ein Ein- oder Ausschaltsignal bilden, wohingegen ein längeres Berühren des selben berührungsempfindlichen Schalters ein Umschalt und/oder Regelungssignal erzeugen kann.

Eine weitere Möglichkeit ergibt sich durch variable Berührungspositionen eines berührungsempfindlichen Schalters. Beispielsweise kann eine mittige Berührung ein Ein- und/oder Ausschaltsignal erzeugen, wohingegen eine Berührung auf einer ersten Seite seitlich der Mitte ein Regelungssignal und eine Berührung auf einer zweiten Seite seitlich der Mitte ein Umschaltsignal erzeugen kann. Dabei können Berührungen an gegenüberliegenden Berührungspositionen entgegengesetzte bzw. einander aufhebende Regelungs- und/oder Umschaltsignale erzeugen.

Wichtig ist hervorzuheben, dass auch eine beliebige Kombination der beschriebenen unterschiedlichen Arten der Erzeugung von Ein- und/oder Ausschaltsignale und/oder Regelungssignale und/oder Umschaltsignale bildenden Steuersignalen bei einem oder mehreren im Innenrückblickspiegel bzw. Spiegelkopf untergebrachten berührungsempfindlichen Schaltern möglich ist.

Vorzugsweise ist vorgesehen, dass zumindest ein Streifen beispielsweise an der Unterseite des Innenrückblickspiegels bzw. Spiegelkopfs eine als Tastfeld eines berührungsempfindlichen Schalters ausgebildete Oberflächenpartie bildet. Mit anderen Worten kann eine als ein Tastfeld eines berührungsempfindlichen Schalters ausgebildete Oberflächenpartie einen Streifen beispielsweise an der Unterseite des Innenrückblickspiegels bzw. Spiegelkopfs einnehmen.

Besonders bevorzugt ist vorgesehen, dass zumindest eine einen um das Spiegelglas umlaufenden Rahmen bildende Oberflächenpartie des Innenrückblickspiegels bzw. Spiegelkopfs als Tastfeld eines berührungsempfindlichen Schalters ausgebildet ist. Mit anderen Worten kann eine als ein Tastfeld eines berührungsempfindlichen Schalters ausgebildete Oberflächenpartie beispielsweise rahmenartig um das Spiegelglas umlaufen oder einen beispielsweise um das Spiegelglas des Innenrückblickspiegels bzw. Spiegelkopfs umlaufenden Rahmen einnehmen. Steuersignale eines solchen berührungsempfindlichen Schalters können beispielsweise zur manuellen Aufund Abblendung bzw. Auf- und Abdimmung eines elektrochromatisch abblendbaren Spiegelglases vorgesehen sein.

Alternativ oder zusätzlich kann die mindestens eine als wenigstens ein Tastfeld zumindest eines berührungsempfindlichen Schalters ausgebildete Oberflächenpartie des Innenrückblickspiegels bzw. Spiegelkopfs zumindest einen Teil eines im Innenrückblickspiegel bzw. Spiegelkopf untergebrachten Spiegelglases bilden.

Alternativ oder zusätzlich kann die mindestens eine als wenigstens ein Tastfeld zumindest eines berührungsempfindlichen Schalters ausgebildete Oberflächenpartie des Innenrückblickspiegels bzw. Spiegelkopfs zumindest einen Teil einer transparenten Abdeckung mindestens einer zumindest zum Teil im Innenrückblickspiegel bzw. Spiegelkopf untergebrachten Beleuchtungseinrichtung einnehmen bzw. bilden. Beispiele von zumindest zum Teil im Innenrückblickspiegel bzw. Spiegelkopf untergebrachten Beleuchtungseinrichtungen sind:
- eine ambiente Innenraumbeleuchtung,
- eine bei geöffneter Tür oder gesondert manuell eingeschalteten Innenraumbeleuchtung,
- eine Lesebeleuchtung.

Vorzugsweise ist hierbei der berührungsempfindliche Schalter derjenigen Beleuchtungseinrichtung zugeordnet, deren transparente Abdeckung die als wenigstens ein Tastfeld des berührungsempfindlichen Schalters ausgebildete Oberflächenpartie des Innenrückblickspiegels bzw. Spiegelkopfs bildet.

Der Innenrückblickspiegel bzw. Spiegelkopf kann ein das Spiegelglas zumindest an dessen Rändern umgreifendes Innenrückblickspiegelgehäuse umfassen. Die mindestens eine als wenigstens ein Tastfeld zumindest eines berührungsempfindlichen Schalters ausgebildete Oberflächenpartie des Innenrückblickspiegels bzw. Spiegelkopfs bildet zumindest einen Teil einer dem Kraftfahrzeuginnenraum zugewandte Außenoberfläche des Innenrückblickspiegelgehäuses des Innenrückblickspiegels bzw. Spiegelkopfs.

Wichtig ist hervorzuheben, dass die Erfindung auch durch eine Innenrückblickspiegelanordnung für Kraftfahrzeuge verwirklicht ist, welche einen vorzugsweise vermittels einer beispielsweise ein- oder mehreiligen Spiegelfußabdeckung zumindest zum Teil verkleideten Spiegelfuß sowie einen daran gelenkig angeordneten Spiegelkopf bzw. Innenrückblickspiegel mit einem Spiegelglas aufweist. Der Innenrückblickspiegel bzw. Spiegelkopf ist als ein zuvor beschriebener Innenrückblickspiegel bzw. Spiegelkopf mit einem darin integrierten bzw. untergebrachten berührungsempfindlichen Schalter ausgebildet.

Vorteile gegenüber dem Stand der Technik ergeben sich unter anderem durch eine Erhöhung der Verkehrssicherheit durch eine intuitive Bedienung bzw. Bedienbarkeit von vermittels im Spiegelkopf bzw. Innenrückblickspiegel untergebrachten berührungsempfindlichen Schaltern betätigbarer elektrischer Komponenten und/oder Verbraucher eines Kraftfahrzeugs. Die intuitive Bedienbarkeit ergibt sich beispielsweise unter anderem durch eine Betätigung vermittels z.B. Berührung einer wahlweise beliebigen Oberflächenpartie eines Innenrückblickspiegels bzw. Spiegelkopfs eines Kraftfahrzeugs, der vorzugsweise mit einer zu bedienenden elektrischen Komponente und/oder mit einem zu bedienenden elektrischen Verbraucher ausgestattet ist.

Weitere Merkmale der Erfindung ergeben sich aus den Ansprüchen, der Beschreibung und den Zeichnungen.

Ausführungsbeispiele der Erfindung sind nachfolgend anhand der Zeichnung näher erläutert. Darin bezeichnen gleiche Bezugszeichen gleiche oder gleich wirkende Elemente. Es zeigt in schematischer Darstellung:

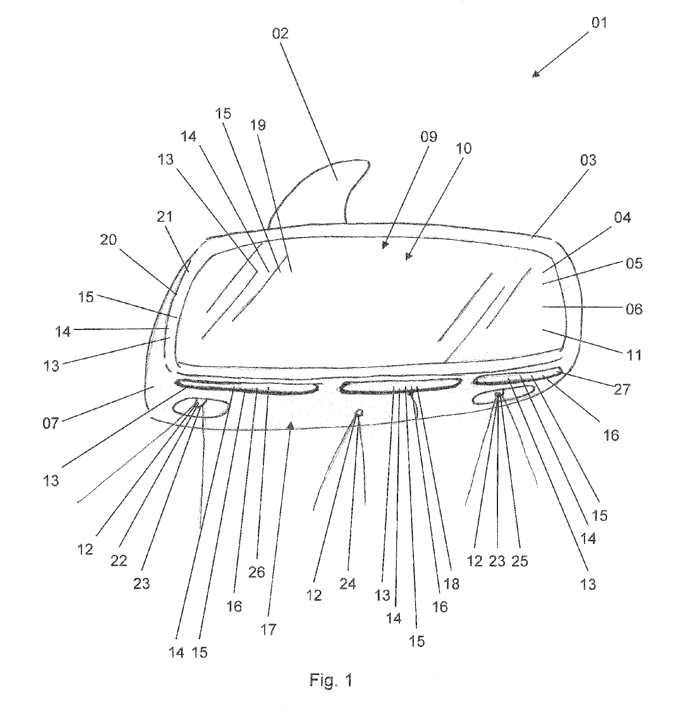

- Fig. 1: einen Innenrückblickspiegel bzw. Spiegelkopf einer Innenrückblickspiegelanordnung für Kraftfahrzeuge mit mindestens einem in den Innenrückblickspiegel bzw. Spiegelkopf integrierten berührungsempfindlichen Schalter zur Betätigung und/oder zum Umschalten wenigstens einer elektrischen Komponente.

Eine in Fig. 1 dargestellte Innenrückblickspiegelanordnung 01 für Kraftfahrzeuge umfasst im Wesentlichen einen gegebenenfalls von einer Spiegelfußabdeckung zumindest zum Teil verkleideten Spiegelfuß 02, sowie einen an dem Spiegelfuß 02 vorzugsweise gelenkig angeordneten Spiegelkopf 03 bzw.

Innenrückblickspiegel mit einem Spiegelglas 04. Die Spiegelfußabdeckung kann ein- oder mehrteilig ausgeführt sein. Ebenfalls ist denkbar, dass die Spiegelfußabdeckung zumindest zum Teil den Spiegelfuß 02 umfasst oder zumindest zum Teil von diesem umfasst wird, beispielsweise durch eine Integrale Anformung z.B. eines Teils der Spiegelfußabdeckung an den Spiegelfuß 02.

Das Spiegelglas 04 kann beispielsweise als ein Keilglas 05 bzw. als ein Keilspiegelglas ausgeführt sein. Alternativ oder zusätzlich kann das Spiegelglas 04 als ein elektrochromatisch abblendbares Spiegelglas 06 ausgeführt sein.

Der an dem Spiegelfuß 02 angeordnete, auch als Spiegelkopf 03 bezeichnete Innenrückblickspiegel der Innenrückblickspiegelanordnung 01 kann ein ein- oder mehrteiliges Innenrückblickspiegelgehäuse 07 aufweisen, welches unter anderem einen dem Spiegelfuß 02 zugeordneten Grundträger beherbergen, einen solchen umfassen, oder von einem solchen umfasst werden kann.

Das gegebenenfalls vorgesehene Innenrückblickspiegelgehäuse 07 weist auf seiner der Fahrtrichtung des Kraftfahrzeugs ab- und dem Fahrer des Kraftfahrzeugs zugewandten Vorderseite 09 eine Öffnung 10 auf, durch welche hindurch das Spiegelglas 04 sichtbar ist bzw. in welcher das Spiegelglas 04 angeordnet ist. Das Innenrückblickspiegelgehäuse 07 umgreift hierbei das Spiegelglas 04 zumindest zum Teil derart, dass z.B. die Einhaltung gesetzlicher Vorgaben bezüglich vorgeschriebener Mindestradien an exponierten, Personen im Kraftfahrzeuginnenraum zugänglichen Stellen sichergestellt ist.

Zur Betätigung wenigstens einer elektrischen Komponente 11 und/oder eines elektrischen Verbrauchers 12 beispielsweise durch Ein- und/oder Ausschalten und/oder Umschalten und/oder Regelung etwa des Betriebs und/oder einer oder mehrerer Funktionen und/oder einer oder mehrerer Einstellungen der wenigstens einen elektrischen Komponente 11 und/oder des wenigstens einen elektrischen Verbrauchers 12 ist mindestens ein berührungsempfindlicher Schalter 13 in den Innenrückblickspiegel bzw. Spiegelkopf 03 integriert.

Der mindestens eine berührungsempfindliche Schalter 13 umfasst vorzugsweise zumindest eine wenigstens von einem Fahrer und/oder Beifahrer eines Kraftfahrzeugs aus frei zugängliche Oberflächenpartie 14 des Innenrückblickspiegels bzw. Spiegelkopfs 03, welche als mindestens ein Tastfeld 15 ausgebildet ist.

Beispielsweise kann eine als ein Tastfeld 15 eines berührungsempfindlichen Schalters 13 ausgebildete Oberflächenpartie 14 des Innenrückblickspiegels bzw. Spiegelkopfs 03 einen Streifen 16 einnehmen. Der Streifen 16 ist vorzugsweise an der Unterseite 17 des Innenrückblickspiegels bzw. Spiegelkopfs 03 angeordnet.

Alternativ oder zusätzlich kann zumindest ein Teil einer einen um das Spiegelglas 05 des Innenrückblickspiegels bzw. Spiegelkopfs 03 umlaufenden Rahmen 21 bildenden Oberflächenpartie 14 des Innenrückblickspiegels bzw. Spiegelkopfs 03 als Tastfeld 15 eines berührungsempfindlichen Schalters 13 ausgebildet sein.

Darüber hinaus kann alternativ oder zusätzlich mindestens eine als wenigstens ein Tastfeld 15 zumindest eines berührungsempfindlichen Schalters 13 ausgebildete Oberflächenpartie 14 des Innenrückblickspiegels bzw. Spiegelkopfs 03 zumindest einen Teil des Spiegelglases 04 einnehmen.

Dabei kann jeder berührungsempfindliche Schalter 13 unterschiedliche Schaltfunktionen eines oder mehrerer konventioneller Schalter übernehmen.

Beispielsweise können mehrere Schaltfunktionen eines oder mehrerer konventioneller Schalter durch verschiedenartigen Umgang mit einem berührungsempfindlichen Schalter 13 verwirklicht sein.

So kann das Tastfeld 15 beispielsweise in der Lage sein, eine oder mehrere beispielsweise druckfreie Berührungen etwa vermittels eines oder mehrerer Finger zu erkennen und zumindest in ein erstes, zur Betätigung wenigstens einer elektrischen Komponente 11 oder zumindest eines elektrischen Verbrauchers 12 beispielsweise durch Ein- und/oder Ausschalten und/oder Umschalten und/oder durch Regelung vorgesehenes bzw. verwendbares Steuerungssignal des berührungsempfindlichen Schalters 13 umzuwandeln.

Darüber hinaus kann das Tastfeld 15 alternativ oder zusätzlich in der Lage sein, mindestens ein beispielsweise druckfreies Entlangstreichen etwa vermittels eines oder mehrerer Finger wahlweise sowohl nach Richtung, als gegebenenfalls auch nach Abmessung zu erfassen bzw. erkennen und dies in mindestens ein zweites, zur Betätigung wenigstens einer elektrischen Komponente 11 oder zumindest eines elektrischen Verbrauchers 12 beispielsweise durch Ein- und/oder Ausschalten und/oder Umschalten und/oder durch Regelung vorgesehenes bzw. verwendbares Steuersignal des berührungsempfindlichen Schalters 13 umzuwandeln.

Ebenfalls ist denkbar, dass das Tastfeld 15 alternativ oder zusätzlich in der Lage ist, die Dauer einer beispielsweise druckfreien Berührung zu erfassen bzw. zu erkennen und dies in mindestens ein weiteres, zumindest ein Ein- und/oder Ausschaltsignal und/oder Umschalt- und/oder Regelungssignal bildendes Steuersignal des berührungsempfindlichen Schalters 13 umzuwandeln.

Ferner kann das Tastfeld 15 alternativ oder zusätzlich in der Lage sein, eine oder mehrere beispielsweise druckfreie Berührungspositionen etwa vermittels eines oder mehrere Finger zu erfassen bzw. zu erkennen und in mindestens ein zusätzliches, zumindest ein Ein- und/oder Ausschaltsignal und/oder Umschalt-und/oder Regelungssignal bildendes Steuersignal des berührungsempfindlichen Schalters 13 umzuwandeln.

Hieraus ergeben sich eine Vielzahl erzeugbarer Schaltfunktionen vermittels nur eines einzigen berührungsempfindlichen Schalters 13 zur Steuerung bzw. Betätigung beispielsweise durch Ein- und/oder Ausschalten und/oder Umschalten und/oder Regelung einer oder mehrerer elektrischer Komponenten 11 und/oder elektrischer Verbraucher 12, wie nachfolgend anhand weder abschließend in Bezug auf die elektrischen Komponenten 11 und Verbraucher 12 sowie deren Betätigung, noch einschränkend auf die Anordnung und Auswahl der hierfür verwendeten berührungsempfindlichen Schalter 13, 18, 19, 20, 26, 27 ausgewählter Beispiele näher erläutert.

Zwischen Spiegelfuß 02 und Spiegelkopf 03 bzw. Innenrückblickspiegel befindet sich vorzugsweise eine gelenkige Verbindung die es erlaubt, den Spiegelkopf 03 bzw. Innenrückblickspiegel mit dem Spiegelglas 04 in einer gewünschten, vom Fahrer des Kraftfahrzeugs individuell einstellbaren Verstelllage gegenüber dem Spiegelfuß 02 einzustellen.

Die gelenkige Verbindung kann für eine gegebenenfalls vorgesehene elektromotorische Verstellung der Verstelllage des Spiegelkopfs 03 bzw. Innenrückblickspiegels einen elektromotorischen Verstellantrieb umfassen. Hierbei kann ein Speicher für mindestens eine individuelle Verstelllage vorgesehen sein, welche durch Abrufen des Speichers wiederholbar genau eingestellt werden kann. Das Abrufen des Speichers, ebenso wie das Einstellen der Verstelllage kann beispielsweise vermittels des mittleren berührungsempfindlichen Schalters 18 der drei jeweils beispielsweise einen Streifen 16 vorzugsweise an der Unterseite 17 des Innenrückblickspiegels bzw. Spiegelkopfs 03 einnehmenden berührungsempfindlichen Schalter 13 erfolgen.

Beispielsweise kann ein längeres, einfaches Berühren des Tastfelds 15 des berührungsempfindlichen Schalters 18 für einen vorgegebenen Zeitraum ein Abrufen des Speichers bewirken. Das einfache Berühren kann beispielsweise ein Berühren vermittels eines Fingers umfassen. Ein Überschreiben des Speichers mit einer neuen, eingestellten Verstelllage kann beispielsweise durch ein längeres, doppeltes Berühren vorgenommen werden. Das doppelte Berühren kann beispielsweise ein Berühren beispielsweise vermittels zweier Finger umfassen.

Um den Spiegelkopf 03 bzw. Innenrückblickspiegel um eine im wesentlichen vertikale Achse beispielsweise nach links zu verschwenken, kann ein Entlangstreichen entlang des Tastfelds 15 des berührungsempfindlichen Schalters 18 von rechts nach links, beispielsweise von einer frei wählbaren Startposition aus vorgesehen sein. Zum Verstellen der Verstelllage nach rechts kann entsprechend ein Entlangstreichen entlang des Tastfelds 15 des berührungsempfindlichen Schalters 18 von links nach rechts vorgesehen sein. Dabei kann die Verstellung der Verstelllage proportional der Abmessung bzw. Länge des Entlangstreichens sein. Für eine Verstellung der Verstelllage um eine im wesentlichen horizontale Achse nach unten kann ein gleichzeitiges Entlangstreichen entlang des Tastfelds 15 des berührungsempfindlichen Schalters 18 beispielsweise vermittels zweier gespreizter Finger von getrennten Berührungspunkten ausgehend aufeinander zu und für eine Verstellung um die horizontale Achse nach oben kann ein gleichzeitiges Entlangstreichen entlang des Tastfelds 15 des berührungsempfindlichen Schalters 18 beispielsweise vermittels zweier gespreizter Finger von einem gemeinsamen Berührungspunkt ausgehend voneinander weg vorgesehen sein. Auch hier kann die Abmessung entlang der das Entlangstreichen erfolgt, abmessbar beispielsweise durch die Entfernung der Berührpunkte bei Beginn bzw. Ende des Entlangstreichens voneinander, als ein Maß für die entsprechende Verstellung herangezogen werden.

Die Innenrückblickspiegelanordnung 01 kann darüber hinaus einen beispielsweise elektromotorisch angetriebenen Abklappmechanismus umfassen, vermittels dem der Spiegelkopf 03 bzw. der Innenrückblickspiegel durch Betätigung einer Bedieneinrichtung, wie etwa eines Kipphebels im mechanischen Fall oder beispielsweise ebenfalls des im Spiegelkopf 03 bzw. Innenrückblickspiegel untergebrachten berührungsempfindlichen Schalters 18 im elektromotorisch betriebenen Fall, um einen definierten Schwenkwinkel aus einer Betriebsstellung beispielsweise um eine im Wesentlichen horizontale Achse der gelenkigen Verbindung in eine Abklappstellung und umgekehrt verschwenkt werden kann, um eine Blendung durch rückwärtige Lichtquellen in der Abklappstellung abzumindern.

Beispielsweise kann ein einfaches Antippen des Tastfelds 15 des berührungsempfindlichen Schalters 18 ein Verschwenken in die Abklappstellung bewirken. Das einfache Antippen kann beispielsweise ein Berühren des Tastfelds 15 vermittels eines Fingers für eine nur kurze Zeitspanne umfassen. Ein Zurückschwenken in die Betriebsstellung kann beispielsweise durch ein doppeltes Antippen vorgenommen werden. Das doppelte Antippen kann beispielsweise ein wiederholtes, kurzes Berühren und/oder ein kurzes Berühren beispielsweise vermittels zweier Finger des Tastfelds 15 umfassen.

Alternativ oder zusätzlich kann zur Vermeidung einer Blendung durch rückwärtige Lichtquellen eine bereits erwähnte elektrochromatische Abblendung des Spiegelglases 04 vorgesehen sein. Das hierzu erforderliche, gegebenenfalls vorgesehene elektrochromatisch abblendbare Spiegelglas 06 kann beispielsweise durch wiederholtes Betätigen beispielsweise ebenfalls eines im Spiegel kopf 03 bzw. Innenrückblickspiegel untergebrachten berührungsempfindlichen Schalters 13 ab- und wieder aufgeblendet werden. Beispielsweise eignet sich für eine intuitive Bedienung besonders ein berührungsempfindlicher Schalter 19, dessen Tastfeld 15 zumindest einen Teil einer durch das Spiegelglas 04 gebildeten Oberflächenpartie 14 des Innenrückblickspiegels bzw. Spiegelkopfs 03 einnimmt. Hier kann beispielsweise ein einfaches Antippen ein Abblenden und eine doppeltes Antippen des zum Teil das als elektrochromatisches Spiegelglas 06 ausgebildete Spiegelglas 05 einnehmenden Tastfelds 15 ein Aufblenden bewirken.

Für die elektromotorische Einstellung der Verstelllage und/oder für das elektromotorische und/oder elektrochromatische Auf- und Abblenden kann alternativ oder zusätzlich jede beliebige, eine intuitive Bedienung zulassende Oberflächenpartie des Innenrückblickspiegels bzw. Spiegelkopfs 03 bzw. dessen Innenrückblickspiegelgehäuses 07 als wenigstens ein Tastfeld 15 zumindest eines berührungsempfindlichen Schalters 13 ausgebildet sein. Beispielsweise eignet sich hierfür auch ein berührungsempfindlicher Schalter 20, dessen Tastfeld 15 zumindest ein Teil der den um das Spiegelglas 05 umlaufenden Rahmen 21 bildenden Oberflächenpartie 14 des Innenrückblickspiegels bzw. Spiegelkopfs 03 einnimmt. Beispielsweise können den gegebenenfalls oberhalb und unterhalb sowie gegebenenfalls links und rechts des Spiegelglases 04 liegende Oberflächenpartien 14 des Rahmens 21 einnehmenden Tastfeldern 15 unterschiedliche durch Berühren und/oder Entlangsreichen abrufbare Schaltfunktionen zugeordnet sein.

Wichtig ist hervorzuheben, dass die beschriebenen Schaltfunktionen alternativ oder zusätzlich zur Einstellung der Verstelllagen von
Außenrückblickspiegelanordnungen eines Kraftfahrzeugs vorgesehen sein können. Hierdurch wird eine Einsparung der ansonsten separat benötigten Bedieneinrichtungen zur Vornahme der Einstellungen von Außenrückblickspiegelanordnungen erreicht. Darüber hinaus hat eine im Innenrückblickspiegel bzw. Spiegelkopf untergebrachte, durch einen oder mehrere berührungsempfindliche Schalter 13 gebildete Bedieneinrichtung zur Vornahme der Einstellung von Außenrückblickspiegelanordnungen von Kraftfahrzeugen den Vorteil, dass für rechts- und linksgelenkte Kraftfahrzeuge gleiche Bauteile verwendet werden können.

Sowohl das elektrochromatisch abblendbare Spiegelglas 06, als auch ein elektromotorischer Verstellantrieb zur Einstellung der Verstelllage und/oder zum Verschwenken des Innenrückblickspiegels bzw. Spiegelkopfs 03 von der Betriebs- in die Abklappposition und umgekehrt stellen Beispiele für elektrische Komponenten 11 dar, welche vermittels eines oder mehrerer berührungsempfindlicher Schalter 13, 18, 19, 20 betätigbar sind.

Beispiele für vermittels eines oder mehrerer berührungsempfindlicher Schalter 13, 20, 26, 27 betätigbarer elektrischer Verbraucher 12 sind eine Lesebeleuchtung 22, 25, eine Innenraumbeleuchtung 23 und eine ambiente Innenraumbeleuchtung 24. So kann beispielsweise die linke Lesebeleuchtung 22 vermittels des linken berührungsempfindlichen Schalters 26 und die rechte Lesebeleuchtung 25 vermittels des rechten berührungsempfindlichen Schalters 27 der drei jeweils beispielsweise einen Streifen 16 vorzugsweise an der Unterseite 17 des Innenrückblickspiegels bzw. Spiegelkopfs 03 einnehmenden berührungsempfindlichen Schalter 13 betätigt werden. Dabei kann das Ein- und Ausschalten der Lesebeleuchtung 22 bzw. 25 durch wiederholtes Antippen des Tastfelds 15 des berührungsempfindlichen Schalters 26 bzw. des berührungsempfindlichen Schalters 27 vorgenommen werden, wohingegen ein Auf- oder Abdimmen der Lesebeleuchtung durch Entlangstreichen vermittels beispielsweise eines Fingers in entgegengesetzten Richtungen des Tastfelds 15 des berührungsempfindlichen Schalters 26 bzw. des berührungsempfindlichen Schalters 27 erfolgen kann. Dabei erfolgt das Aufdimmen durch Entlangstreichen in einer ersten Richtung und das Abdimmen durch Entlangstreichen in entgegengesetzter Richtung. Auch hier kann die Abmessung des Entlangstreichens ein Maß für den Grad der Dimmung bilden.

Die Lesebeleuchtungen 22, 25 können darüber hinaus eine bei geöffneter Fahrzeugtür oder andersartig manuell eingeschalteten Innenraumbeleuchtung 23 bilden. Dabei kann ein Umschalten zwischen einer bei geöffneter Fahrzeugtür eingeschalteten Innenraumbeleuchtung 23 und einer bei geöffneter Fahrzeugtür ausgeschaltet bleibenden Innenraumbeleuchtung 23 beispielsweise durch wiederholtes langanhaltendes Berühren eines der Tastfelder 15 der beiden berührungsempfindlichen Schalter 26, 27 erfolgen.

Ein Ein- und Ausschalten sowie gegebenenfalls Dimmen der ambienten Innenraumbeleuchtung 24 kann beispielsweise vermittels des berührungsempfindlichen Schalters 21 vorgenommen werden, dessen Tastfeld 15 zumindest eine wenigstens einen Teil des das Spiegelglas 04 umgebenden Rahmens 21 bildende Oberflächenpartie 14 einnimmt. Auch hier kann ein wiederholtes kurzes Antippen oder langes Berühren ein wiederholtes Ein- und Ausschalten der ambienten Innenraumbeleuchtung 24 bewirken, wohingegen ein Entlangstreichen ein Dimmen bewirken kann.

Grundsätzlich kann eine längere Berührung einem kurzen Antippen vorgezogen werden, da dies durch den länger herzustellenden Kontakt unbeabsichtigte Fehlbedienungen ausschließt.

Wichtig ist hervorzuheben, dass auch eine beliebige Kombination der beschriebenen unterschiedlichen Arten der Erzeugung von Ein- und/oder Ausschaltsignale und/oder Regelungssignale und/oder Umschaltsignale bildenden Steuersignalen bei einem oder mehreren im Innenrückblickspiegel bzw. Spiegelkopf 03 untergebrachten berührungsempfindlichen Schaltern 13, 18, 19, 20, 26, 27 möglich ist.

Die Erfindung ist insbesondere im Bereich der Herstellung von Innenrückblickspiegelanordnungen für Kraftfahrzeuge gewerblich anwendbar.

### Bezugszeichenliste

- 01: Innenrückblickspiegelanordnung
- 02: Spiegelfuß
- 03: Spiegel kopf
- 04: Spiegelglas
- 05: Keilglas
- 06: elektrochromatisch abblendbares Spiegelglas
- 07: Innenrückblickspiegelgehäuse
- 09: Vorderseite
- 10: Öffnung
- 11: elektrische Komponente
- 12: elektrischer Verbraucher
- 13: berührungsempfindlicher Schalter
- 14: Oberflächenpartie
- 15: Tastfeld
- 16: Streifen
- 17: Unterseite
- 18: berührungsempfindlicher Schalter
- 19: berührungsempfindlicher Schalter
- 20: berührungsempfindlicher Schalter
- 21: Rahmen
- 22: Lesebeleuchtung
- 23: Innenraumbeleuchtung
- 24: ambiente Innenraumbeleuchtung
- 25: Lesebeleuchtung
- 26: berührungsempfindlicher Schalter
- 27: berührungsempfindlicher Schalter

## Patentansprüche

1. Innenrückblickspiegel bzw. Spiegelkopf (03) einer
Innenrückblickspiegelanordnung für Kraftfahrzeuge,
**gekennzeichnet durch**
mindestens einen in den Innenrückblickspiegel bzw. Spiegelkopf (03) integrierten berührungsempfindlichen Schalter (13, 18, 19, 20, 26, 27) zur Betätigung wenigstens einer elektrischen Komponente (11, 06) und/oder eines elektrischen Verbrauchers (12, 22, 23, 24, 25).

2. Innenrückblickspiegel bzw. Spiegelkopf nach Anspruch 1,
**dadurch gekennzeichnet,**
**dass** der mindestens eine berührungsempfindliche Schalter (13, 18, 19, 20, 26, 27) zumindest eine wenigstens von einem Fahrer und/oder Beifahrer eines Kraftfahrzeugs aus frei zugängliche Oberflächenpartie (14) des Innenrückblickspiegels bzw. Spiegelkopfs (03) umfasst, welche als mindestens ein Tastfeld (15) ausgebildet ist.

3. Innenrückblickspiegel bzw. Spiegelkopf nach Anspruch 2,
**dadurch gekennzeichnet,**
**dass** eine als ein Tastfeld (15) eines berührungsempfindlichen Schalters (13, 18, 26, 27) ausgebildete Oberflächenpartie (14) des Innenrückblickspiegels bzw. Spiegelkopfs (03) einen Streifen (16) einnimmt.

4. Innenrückblickspiegel bzw. Spiegelkopf nach Anspruch 3,
**dadurch gekennzeichnet,**
**dass** der Streifen (16) an der Unterseite (17) des Innenrückblickspiegels bzw. Spiegelkopfs (03) angeordnet ist.

5. Innenrückblickspiegel bzw. Spiegelkopf nach einem der Ansprüche 2, 3 oder 4,
**dadurch gekennzeichnet,**
**dass** zumindest ein Teil einer einen um ein Spiegelglas (04, 05, 06) des Innenrückblickspiegels bzw. Spiegelkopfs (03) umlaufenden Rahmen (21) bildenden Oberflächenpartie (14) des Innenrückblickspiegels bzw. Spiegelkopfs (03) als Tastfeld (15) eines berührungsempfindlichen Schalters (13, 20) ausgebildet ist.

6. Innenrückblickspiegel bzw. Spiegelkopf nach einem der Ansprüche 2 bis 5, **dadurch gekennzeichnet,**
**dass** mindestens eine als wenigstens ein Tastfeld (15) zumindest eines berührungsempfindlichen Schalters (13, 19) ausgebildete Oberflächenpartie (14) des Innenrückblickspiegels bzw. Spiegelkopfs (03) zumindest einen Teil eines Spiegelglases (04, 05, 06) des Innenrückblickspiegel bzw. Spiegelkopfs (03) einnimmt.

7. Innenrückblickspiegel bzw. Spiegelkopf nach Anspruch 5 oder 6,
**dadurch gekennzeichnet,**
**dass** der berührungsempfindliche Schalter (13, 19) mit dem wenigstens zum Teil den Rahmen (21) oder das Spiegelglas (04, 05, 06) einnehmenden Tastfeld (15) zur manuellen Auf- und Abblendung eines elektrochromatisch abblendbaren Spiegelglases (06) vorgesehen ist.

8. Innenrückblickspiegel bzw. Spiegelkopf nach einem der Ansprüche 2 bis 7, **dadurch gekennzeichnet,**
**dass** mindestens eine als wenigstens ein Tastfeld (15) zumindest eines berührungsempfindlichen Schalters (13) ausgebildete Oberflächenpartie (14) des Innenrückblickspiegels bzw. Spiegelkopfs (03) zumindest einen Teil einer transparenten Abdeckung mindestens einer wenigstens zum Teil im Innenrückblickspiegel bzw. Spiegelkopf (03) untergebrachten Beleuchtungseinrichtung (22, 23, 24, 25) einnimmt.

9. Innenrückblickspiegel bzw. Spiegelkopf nach Anspruch 8,
**dadurch gekennzeichnet,**
**dass** der berührungsempfindliche Schalter (13) derjenigen Beleuchtungseinrichtung (22, 23, 24, 25) zugeordnet ist, deren transparente Abdeckung zumindest zum Teil von einer ein Tastfeld (15) des berührungsempfindlichen Schalters (13) bildenden Oberflächenpartie (14) des Innenrückblickspiegels bzw. Spiegelkopfs (03) eingenommen ist.

10. Innenrückblickspiegel bzw. Spiegelkopf nach einem der Ansprüche 2 bis 9, **dadurch gekennzeichnet,**
**dass** das Tastfeld (15) eine Berührung zumindest in ein erstes Steuerungssignal des berührungsempfindlichen Schalters (13, 18, 19, 20, 26, 27) umwandelt.

11. Innenrückblickspiegel bzw. Spiegelkopf nach Anspruch 10,
**gekennzeichnet durch**
eine Abhängigkeit des mindestens einen ersten Steuersignals von einer Berührungsposition, an welcher die Berührung des Tastfelds (15) erfolgt.

12. Innenrückblickspiegel bzw. Spiegelkopf nach Anspruch 10 oder 11,
**gekennzeichnet durch**
eine Abhängigkeit des mindestens einen ersten Steuersignals von einer Dauer der Berührung.

13. Innenrückblickspiegel bzw. Spiegelkopf nach einem der Ansprüche 2 bis 12,
**dadurch gekennzeichnet,**
**dass** das Tastfeld (15) ein Entlangstreichen in mindestens ein zweites Steuersignal des berührungsempfindlichen Schalters (13, 18, 19, 20, 26, 27) umwandelt.

14. Innenrückblickspiegel bzw. Spiegelkopf nach Anspruch 13,
**gekennzeichnet durch**
eine Abhängigkeit des mindestens einen zweiten Steuersignals von einer Abmessung und/oder Richtung des Entlangstreichens.

15. Innenrückblickspiegel bzw. Spiegelkopf nach einem der Ansprüche 10 bis 14,
**dadurch gekennzeichnet,**
**dass** die Berührung und/oder das Entlangstreichen druckfrei erfolgen.

## Geänderte Patentansprüche

### Geänderte Patentansprüche gemäss Regel 137(2) EPÜ.

**1.** Innenrückblickspiegel bzw. Spiegelkopf (03) einer Innenrückblickspiegelanordnung für Kraftfahrzeuge, **gekennzeichnet durch**
mindestens einen in den Innenrückblickspiegel bzw. Spiegelkopf (03) integrierten berührungsempfindlichen Schalter (13, 18, 19, 20, 26, 27) zur Betätigung wenigstens einer elektrischen Komponente (11, 06) und/oder eines elektrischen Verbrauchers (12, 22, 23, 24, 25),wobei der mindestens eine berührungsempfindliche Schalter (13, 18, 19, 20, 26, 27) zumindest eine wenigstens von einem Fahrer und/oder Beifahrer eines Kraftfahrzeugs aus frei zugängliche Oberflächenpartie (14) des Innenrückblickspiegels bzw. Spiegelkopfs (03) umfasst, welche als mindestens ein Tastfeld (15) ausgebildet ist, **dadurch gekennzeichnet,**
**dass** mindestens eine als wenigstens ein Tastfeld (15) zumindest eines berührungsempfindlichen Schalters (13) ausgebildete Oberflächenpartie (14) des Innenrückblickspiegels bzw. Spiegelkopfs (03) zumindest einen Teil einer transparenten Abdeckung mindestens einer wenigstens zum Teil im Innenrückblickspiegel bzw. Spiegelkopf (03) untergebrachten Beleuchtungseinrichtung (22, 23, 24, 25) einnimmt.

**2.** Innenrückblickspiegel bzw. Spiegelkopf nach Anspruch 1,
**dadurch gekennzeichnet,**
**dass** eine als ein Tastfeld (15) eines berührungsempfindlichen Schalters (13, 18, 26, 27) ausgebildete Oberflächenpartie (14) des Innenrückblickspiegels bzw. Spiegelkopfs (03) einen Streifen (16) einnimmt.

**3.** Innenrückblickspiegel bzw. Spiegelkopf nach Anspruch 2,
**dadurch gekennzeichnet,**
**dass** der Streifen (16) an der Unterseite (17) des Innenrückblickspiegels bzw. Spiegelkopfs (03) angeordnet ist.

**4.** Innenrückblickspiegel bzw. Spiegelkopf nach einem der Ansprüche 1, 2 oder 3,
**dadurch gekennzeichnet,**
**dass** zumindest ein Teil einer einen um ein Spiegelglas (04, 05, 06) des Innenrückblickspiegels bzw. Spiegelkopfs (03) umlaufenden Rahmen (21) bildenden Oberflächenpartie (14) des Innenrückblickspiegels bzw. Spiegelkopfs (03) als Tastfeld (15) eines berührungsempfindlichen Schalters (13, 20) ausgebildet ist.

**5.** Innenrückblickspiegel bzw. Spiegelkopf nach einem der Ansprüche 1 bis 4,
**dadurch gekennzeichnet,**
**dass** mindestens eine als wenigstens ein Tastfeld (15) zumindest eines berührungsempfindlichen Schalters (13, 19) ausgebildete Oberflächenpartie (14) des Innenrückblickspiegels bzw. Spiegelkopfs (03) zumindest einen Teil eines Spiegelglases (04, 05, 06) des Innenrückblickspiegel bzw. Spiegelkopfs (03) einnimmt.

**6.** Innenrückblickspiegel bzw. Spiegelkopf nach Anspruch 4 oder 5,
**dadurch gekennzeichnet,**
**dass** der berührungsempfindliche Schalter (13, 19) mit dem wenigstens zum Teil den Rahmen (21) oder das Spiegelglas (04, 05, 06) einnehmenden Tastfeld (15) zur manuellen Auf- und Abblendung eines elektrochromatisch abblendbaren Spiegelglases (06) vorgesehen ist.

**7.** Innenrückblickspiegel bzw. Spiegelkopf nach einem der Ansprüche 1 bis 6,
**dadurch gekennzeichnet,**
**dass** der berührungsempfindliche Schalter (13) derjenigen Beleuchtungseinrichtung (22, 23, 24, 25) zugeordnet ist, deren transparente Abdeckung zumindest zum Teil von einer ein Tastfeld (15) des berührungsempfindlichen Schalters (13) bildenden Oberflächenpartie (14) des Innenrückblickspiegels bzw. Spiegelkopfs (03) eingenommen ist.

**8.** Innenrückblickspiegel bzw. Spiegelkopf nach einem der Ansprüche 1 bis 7,
**dadurch gekennzeichnet,**
**dass** das Tastfeld (15) eine Berührung zumindest in ein erstes Steuerungssignal des berührungsempfindlichen Schalters (13, 18, 19, 20, 26, 27) umwandelt.

**9.** Innenrückblickspiegel bzw. Spiegelkopf nach Anspruch 8,
**gekennzeichnet durch**
eine Abhängigkeit des mindestens einen ersten Steuersignals von einer Berührungsposition, an welcher die Berührung des Tastfelds (15) erfolgt.

**10.** Innenrückblickspiegel bzw. Spiegelkopf nach Anspruch 8 oder 9,
**gekennzeichnet durch**
eine Abhängigkeit des mindestens einen ersten Steuersignals von einer Dauer der Berührung.

**11.** Innenrückblickspiegel bzw. Spiegelkopf nach einem der Ansprüche 1 bis 10,
**dadurch gekennzeichnet,**
**dass** das Tastfeld (15) ein Entlangstreichen in mindestens ein zweites Steuersignal des berührungsempfindlichen Schalters (13, 18, 19, 20, 26, 27) umwandelt.

**12.** Innenrückblickspiegel bzw. Spiegelkopf nach Anspruch 11,
**gekennzeichnet durch**
eine Abhängigkeit des mindestens einen zweiten Steuersignals von einer Abmessung und/oder Richtung des Entlangstreichens.

**13.** Innenrückblickspiegel bzw. Spiegelkopf nach einem der Ansprüche 8 bis 12,
**dadurch gekennzeichnet,**
**dass** die Berührung und/oder das Entlangstreichen druckfrei erfolgen.
